# EUROPÄISCHE PATENTSCHRIFT

(11) **EP 3 027 899 B1**
(45) Veröffentlichungstag und Bekanntmachung des Hinweises auf die Patenterteilung: **27.02.2019**
(21) Anmeldenummer: 14741865.1
(22) Anmeldetag: 18.07.2014
(51) Int. Cl.: F03D 80/80

(54) **WINDENERGIEANLAGE**
WIND TURBINE
ÉOLIENNE

(30) Priorität: 30.07.2013 DE 102013214920
(43) Veröffentlichungstag der Anmeldung: 08.06.2016
(73) Patentinhaber: Wobben Properties GmbH, 26607 Aurich (DE)
(72) Erfinder: RÖER, Jochen, 27777 Ganderkesee (DE); KÖHLER, Jan-Phillip, 26632 Ihlow (DE)
(74) Vertreter: Eisenführ Speiser
(86) Internationale Anmeldenummer: PCT/EP2014/065545
(87) Internationale Veröffentlichungsnummer: WO 2015/014640

(56) Entgegenhaltungen:
- EP-A1- 2 505 822
- EP-A2- 2 587 054
- JP-A- 2008 298 051

## Beschreibung

Die vorliegende Erfindung betrifft eine Windenergieanlage.
Eine Windenergieanlage weist typischerweise einen Turm und eine Gondel, die auf dem Turm platziert wird, auf. Die Gondel trägt den Rotor (der sich drehende Teil) der Windenergieanlage. Die Windenergieanlage weist eine Transportvorrichtung zum Transport von Lasten (z. B. zu Wartungszwecken) vom Boden in die Gondel auf. Zur Windnachführung kann der Azimutwinkel der Gondel verstellt werden. In der Gondel kann ein elektrischer Generator vorgesehen sein, welcher direkt oder indirekt mit dem Rotor der Windenergieanlage gekoppelt ist. Die von dem Generator erzeugte elektrische Energie wird beispielsweise über Kabel im Inneren des Turms bis in den Bereich des Turmfußes transportiert. Aufgrund der Windnachführung kann es vorkommen, dass sich die Gondel mehrfach um die Turmachse herum dreht. Dies kann insbesondere kritisch hinsichtlich der Verdrillung der Leistungskabel von dem Generator in den Turmfuß sein.
DE 10 2009 013 728 A1 zeigt eine Windenergieanlage mit einer verdrillbaren Gondel-Kabelführung. EP 2587054 A2 offenbart eine Kabelführung für eine Windenergieanlage.

DE 102 24 439 A1 beschreibt ein Verfahren zur Montage oder Demontage von Komponenten einer Windenergieanlage. Hierbei befindet sich eine Winde am Boden und ein Seil verläuft zur Gondel und verläuft über Umlenkrollen wieder nach unten. Zusätzlich ist eine Winde in der Gondel vorgesehen. Die Winde dient dazu, Lasten außerhalb des Turms nach oben in die Gondel zu transportieren.
Es ist eine Aufgabe der vorliegenden Erfindung, eine Windenergieanlage vorzusehen, welche über verbesserte Transportmöglichkeiten von Lasten in die Gondel verfügt.
Diese Aufgabe wird durch eine Windenergieanlage nach Anspruch 1 gelöst.
Somit wird eine Windenergieanlage mit einem Turm mit einer Längsachse, einer drehbar auf dem Turm vorgesehenen Gondel, einer Mehrzahl von (Leistungs-)Kabeln, welche sich von der Gondel in den Turm erstrecken, und einer Transporteinheit vorgesehen. Die Transporteinheit ist innerhalb der Gondel befestigt und dient dazu, Lasten innerhalb des Turms zu der Gondel oder nach unten zu transportieren. Die Transporteinheit weist eine Kabelführungseinheit mit einer Mehrzahl von Ringen auf, wobei die (Leistungs-)Kabel am Umfang der Ringe befestigt sind, so dass ein Bereich im Inneren der Ringe für den Transport der Last frei gehalten wird. Ein oberster Ring wird an der Gondel befestigt und ein unterster Ring ist drehfest in oder an dem Turm befestigt. Der unterste Ring weist eine drehfeste Führung entlang der Längsachse des Turms auf.

Leistungskabel stellen dabei diejenigen Kabel dar, welche zur Übertragung der in einem Generator erzeugten elektrischen Energie beispielsweise an einen Leistungsschrank im Turm der Windenergieanlage verwendet werden. Insbesondere können die Leistungskabel für eine DC-Übertragung dienen, d. h. die Kabel sind mit dem Ausgang eines Gleichrichters gekoppelt, der beispielsweise in der Gondel der Windenergieanlage angeordnet ist und eine von dem elektrischen Generator der Windenergieanlage erzeugte Wechselspannung in eine Gleichspannung umwandelt. Alternativ dazu können die Leistungskabel natürlich auch für eine Wechselspannungsübertragung verwendet werden.

Gemäß einem Aspekt der vorliegenden Erfindung sind die Leistungskabel am äußeren Umfang der Ringe angeordnet.

Gemäß einem weiteren Aspekt der vorliegenden Erfindung weist der unterste Ring mindestens zwei Ringführungen auf, um mittels der Ringführungen entlang der Führung geführt zu werden, wobei die Führung sich entlang der Längsachse des Turms erstreckt.

Gemäß einem weiteren Aspekt der vorliegenden Erfindung wird bei der Berechnung der für den Transport der Last maximal verfügbaren Innendurchmesser der Ringe die Erstreckung der Kabel zwischen benachbarten Ringen berücksichtigt.

Die Erfindung betrifft den Gedanken, eine Windenergieanlage mit einem Turm und einer Gondel vorzusehen. In der Gondel ist eine Transporteinheit vorgesehen. Im Übergangsbereich zwischen Gondel und Turm weist die Transporteinheit eine Mehrzahl von Ringen auf, an welchen Kabel oder Leistungskabel befestigt werden. Die Ringe haben einen Mindestdurchmesser, so dass ein Transportkorb der Transporteinheit durch die Ringe transportiert werden kann. Der unterste Ring ist über mindestens eine Führungsschiene drehfest an der Turmwandung befestigt. Der untere Ring kann somit lediglich eine vertikale Bewegung nach oben oder unten, nicht jedoch eine Drehbewegung vollziehen.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2: zeigt eine schematische Schnittansicht eines Teils einer Windenergieanlage gemäß einem ersten Ausführungsbeispiel,
- Fig. 3: zeigt eine schematische Schnittansicht der Windenergieanlage gemäß dem ersten Ausführungsbeispiel,
- Fig. 4: zeigt eine schematische Schnittansicht eines unteren Ringes einer Kabelführung gemäß einem zweiten Ausführungsbeispiel,
- Fig. 5: zeigt eine schematische Darstellung einer Führung für den unteren Ring von Fig. 4,
- Fig. 6: zeigt eine schematische Schnittansicht eines Teils einer Windenergieanlage gemäß einem dritten Ausführungsbeispiel, und
- Fig. 7 - 9: zeigen jeweils eine schematische Schnittansicht eines Teils einer Windenergieanlage gemäß einem fünften Ausführungsbeispiel.

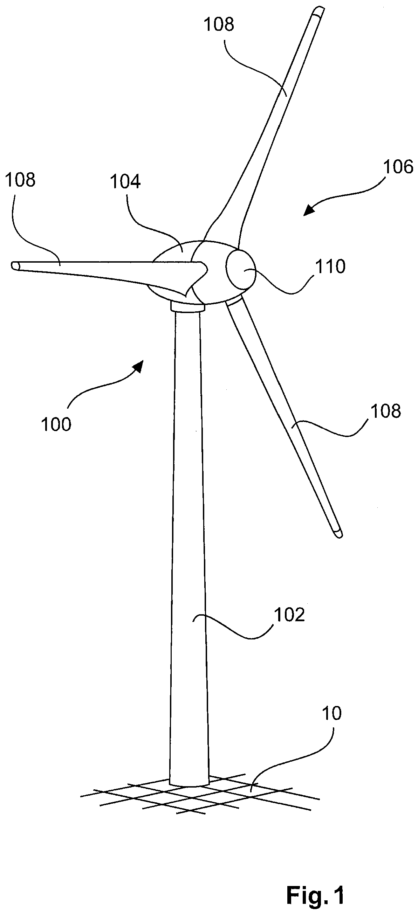

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die durch den elektrischen Generator erzeugte elektrische Energie kann mittels Leistungskabeln aus der Gondel in den unteren Bereich des Turms übertragen werden, wo die elektrische Energie, welche beispielsweise in Form einer Gleichspannung vorhanden ist, beispielsweise in eine Wechselspannung umgewandelt werden kann. Die Pitchwinkel der Rotorblätter 108 können durch Pitchmotoren an den Rotorblattwurzeln der jeweiligen Rotorblätter 108 verändert werden. Die Ausrichtung der Gondel 104 kann zur Windnachführung verstellt werden. Zur Übertragung der durch den Generator erzeugten Energie sind Leistungskabel von der Gondel 104 in den Turmfuß verlegt.

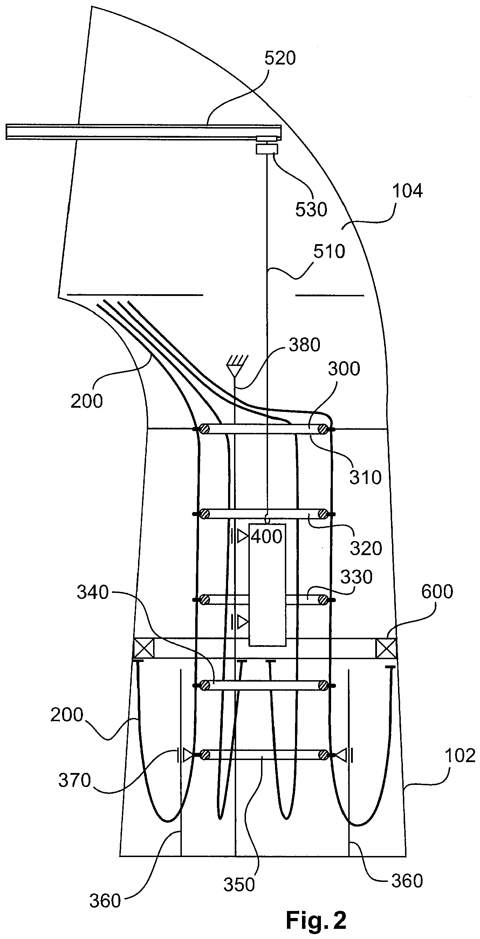

Fig. 2 zeigt eine schematische Schnittansicht eines Teils einer Windenergieanlage gemäß einem ersten Ausführungsbeispiel. In Fig. 2 ist der Übergang zwischen einem Turm 102 und einer Gondel 104 schematisch dargestellt. Die Gondel 104 befindet sich auf dem Turm 102 und kann mittels eines Azimutlagers 600 gedreht werden, um in ihrer Azimutposition gedreht zu werden. Dies erfolgt zur Windnachführung, damit sich der aerodynamische Rotor optimal zum vorherrschenden Wind befindet. Von der Gondel 104 führt eine Mehrzahl von Leistungskabeln 200 in den Turm 102 nach unten in den Turmfuß, zu dort vorgesehenen Leistungsschränken. In der Gondel 102 ist eine Transporteinheit 500 vorgesehen. Sie dient dazu, Lasten 400 innerhalb des Turms 102 nach oben oder unten zu transportieren. Im Bereich zwischen der Gondel und dem Turm 102 ist eine Kabelführungseinheit 300 als Teil der Transporteinheit 500 vorgesehen. Die Kabelführungseinheit 300 weist eine Mehrzahl von Ringen 310, 320, 340, 350 auf. Entlang des Umfangs der Ringe 310 - 350 ist eine Mehrzahl von Leistungskabeln 200 angeordnet. Der unterste Ring 350 weist eine drehfeste Führung 360 auf. Der unterste Ring 350 ist über Ringführungen 370 in der Führung 360 gehalten.

Dadurch, dass die Leistungskabel 200 an dem Umfang der Ringe 310 - 350 befestigt sind, ist der Innenbereich zwischen den Ringen frei und kann von der Transporteinheit 500 zum Transport von Lasten 400 nach oben oder unten verwendet werden.

Gemäß der Erfindung kann die Transporteinheit 500 einen Träger 520, eine Zugeinheit 530 und eine Kette 510 aufweisen, mittels derer beispielsweise eine Last 400 im Inneren der Ringe nach oben oder unten befördert werden kann.

Mit der erfindungsgemäßen Ausgestaltung der Kabelbefestigung kann erreicht werden, dass die Lasten nicht mehr außen am Turm, sondern innerhalb des Turmes nach oben oder unten befördert werden können.

Gemäß der Erfindung ist der oberste Ring 310 an der Gondel befestigt. Der unterste Ring 350 wird mittels einer Ringführung 370 in einer Führung 360 im Wesentlichen drehfest geführt. Diese Führung 360 erstreckt sich entlang der Längsachse des Turms 102, d. h. vertikal. Die Ringe zwischen dem obersten Ring 310 und dem untersten Ring 350 sind nicht drehfest montiert, so dass sie sich bei einer Verdrehung des obersten Ringes 310 und somit beim Verdrehen der Leistungskabel entsprechend mitdrehen können. Hierbei wird die Drehung des obersten Ringes 310 über die Leistungskabel 200 auf die darunter liegenden Ringe 320 - 340 übertragen.

Die Last 400 kann mittels eines Führungsseiles 380 entlang der Längsachse des Turms geführt werden.

Durch die drehfeste Führung des untersten Ringes 350 führt der untere Ring keine Drehung, sondern lediglich eine translatorische Hubbewegung in Richtung der Längsachse des Turmes aus, wenn es zu einer Verdrillung der Leistungskabel 200 kommt.

Wenn es zu einer Verdrehung der Gondel aufgrund der Windnachführung kommt, dreht sich der oberste Ring 310 mit der Gondel 104 und die Kabel 200 zwischen dem obersten Ring 310 und dem untersten Ring 350 verlaufen schraubenartig um den von den Ringen 310 - 350 freigehaltenen vorzugsweise zylinderförmigen Raum. Aufgrund des zunehmend schraubenartigen Verlaufes der Kabel 200 zwischen dem obersten Ring 310 und dem untersten Ring 350 bewegen sich die Ringe ab dem obersten Ring nach oben, so dass die Ringe einen Hub vollziehen. Hierbei ist darauf hinzuweisen, dass der unterste Ring 350 den größten Hub vollzieht.

Die erfindungsgemäße Kabelführungseinheit 300 ist vorteilhaft, da bei einer Verdrehung der Gondel die Leistungskabel 200 nur gebogen, jedoch nicht zusätzlich tordiert werden.

Da gemäß der Erfindung die Leistungskabel 200 entlang des Umfanges der Ringe 310 - 350 angeordnet sind, kommt es zu einer verbesserten Belüftung der Kabel und somit einer verbesserten Kühlung der Kabel. Gemäß der Erfindung kann eine Kabelführung mit einer sehr gleichmäßigen Biegung erreicht werden.

Die Transporteinheit 500 wird dazu verwendet, eine Last 400 in die Gondel 104 oder nach unten zu transportieren, wobei die Last 400 innerhalb der Ringe 310 - 350 der Kabelführungseinheit 300 nach oben transportiert wird. Damit müssen die Durchmesser der Ringe 310 - 350 entsprechend ausgewählt werden, damit die zu transportierenden Lasten entsprechend nach oben transportiert werden können.

Gemäß der Erfindung wird eine Transport- bzw. Hebeeinheit innerhalb der Gondel und des Turms vorgesehen. Die Hebevorrichtung bzw. Transportvorrichtung weist einen Träger 520 im Bereich der Gondel, einen Kettenzug 530 sowie eine Kette oder ein Seil 510 auf, mittels welcher eine Last 400 nach oben in die Gondel transportiert werden kann. Die Transporteinheit weist ferner eine Kabelführungseinheit 300 mit einer Mehrzahl von Ringen auf. An den Ringen werden die Leistungskabel 200 derart befestigt, dass sich der z. B. zylinderförmige Bereich innerhalb der Ringe 310 - 350 freigehalten wird. Dieser Bereich kann dann dazu verwendet werden, um Lasten 400 durch den Turm 102 in die Gondel zu transportieren.

Gemäß der Erfindung kann die Last 400 einen Außendurchmesser von z. B. bis zu 400 mm aufweisen.

Bei der Dimensionierung des Durchmessers der Ringe 310 - 350 muss nicht nur der äußere Durchmesser der zu transportierenden Last 400 berücksichtigt werden, sondern auch der Verlauf der Leistungskabel 200 zwischen zwei benachbarten Ringen. Es ist davon auszugehen, dass ein Kabel zwischen benachbarten Ringen den kürzesten Weg zwischen den Aufhängepunkten an den beiden Ringen einnimmt. Dies kann dazu führen, dass der effektiv freibleibende Transportweg bzw. Transportvolumen oder Transportdurchmesser innerhalb der Ringe reduziert wird.

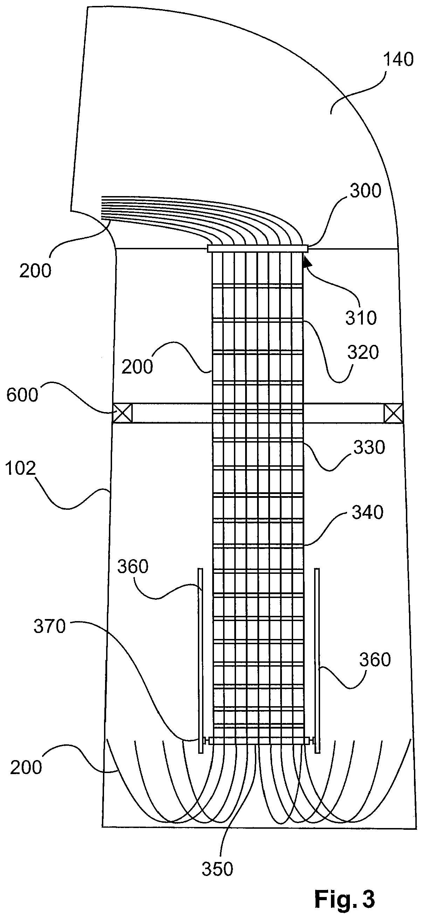

Fig. 3 zeigt eine schematische Schnittansicht eines Teils einer Windenergieanlage gemäß einem zweiten Ausführungsbeispiel. In Fig. 3 ist die Kabelführungseinheit 300 detailliert gezeigt. Die Kabelführungseinheit 300 gemäß dem zweiten Ausführungsbeispiel kann auf der Kabelführungseinheit gemäß dem ersten Ausführungsbeispiel beruhen bzw. basieren. Die Kabelführungseinheit 300 dient zum Führen der Leistungskabel 200 aus der Gondel 104 in den Turm 102. Durch die Kabelführungseinheit 300 soll eine mögliche Drehbewegung der Gondel aufgefangen werden. Dazu weist die Kabelführungseinheit 300 eine Mehrzahl von Ringen 310 - 350 auf. Der oberste Ring 310 ist vorzugsweise fest mit der Gondel 104 verbunden. Der unterste Ring 350 wird über eine Ringführung 370 in einer Führung 360 gehalten, welche sich entlang der Längsachse des Turms 102 erstreckt. Gemäß dem zweiten Ausführungsbeispiel sind zwei Führungen 360 vorgesehen. Alternativ können auch mehrere Führungen vorgesehen sein. Damit ist der untere Ring 350 drehfest innerhalb der Führung 360 gelagert. Die Ringe 320 - 340 zwischen dem obersten Ring 310 und dem untersten Ring 350 sind nicht drehfest vorgesehen. Bei einer Drehung der Gondel 104 dreht sich der oberste Ring 320 mit und die darunter befindlichen Ringe werden durch ein Mitdrehen der Kabel 200 mitgedreht. Dabei verlaufen die Kabel dann schraubenförmig. Je größer die Drehung der Gondel 104 und damit die Drehung des obersten Ringes 310, desto höher wird der Hub der Ringe 320 - 350. Hierbei vollführt der unterste Ring 350 den größten Hub.

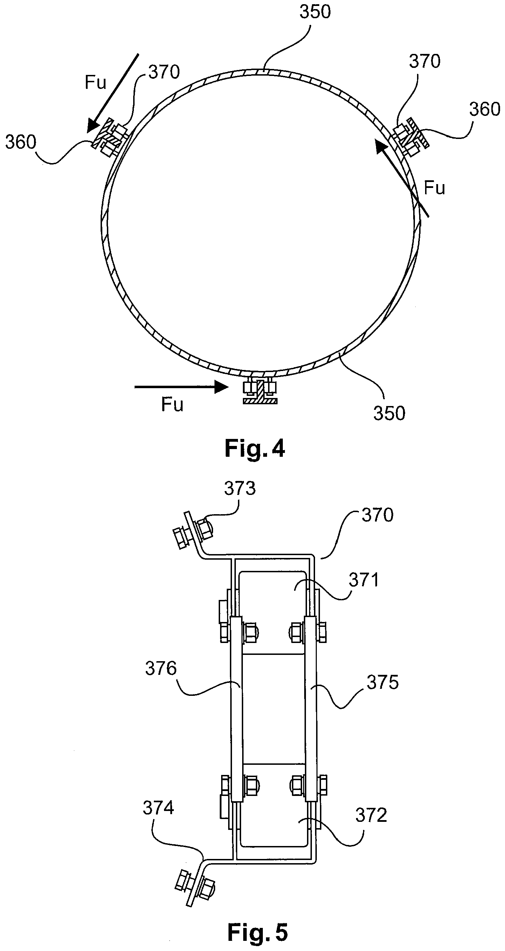

Fig. 4 zeigt eine schematische Schnittansicht eines untersten Ringes 350 einer Kabelführungseinheit gemäß dem ersten oder zweiten Ausführungsbeispiel. Der unterste Ring 350 weist drei Ringführungen 370 auf, so dass der unterste Ring 350 an drei Führungen 360 entlang geführt werden kann. Gemäß der Erfindung sollten wenigstens zwei Führungen 360 sowie zwei Ringführungen 370 an dem untersten Ring 350 vorhanden sein.

Fig. 5 zeigt eine schematische Darstellung einer Ringführung eines untersten Ringes 350 einer Kabelführungseinheit gemäß dem ersten oder zweiten Ausführungsbeispiel. Die Ringführung 370 weist zwei Führungsrollen 371, 372 auf. Die Ringführungseinheit 370 kann über Bleche 373, 374 z. B an dem Turm 102 befestigt werden. Zwischen den Führungsrollen 371, 372 können Abstandsbleche 375 vorgesehen sein. Auf der Innenseite der Abstandsfläche 365 zwischen den beiden Führungsrollen 371, 372 können optional Kunststoffgleitelemente 376 vorgesehen sein.

Gemäß der Erfindung kann eine Verbindung zwischen den Kabeln 200 und den Ringen 310 - 350 z. B. über Kabelbinder erfolgen.

Gemäß der Erfindung können die Kabel 200 über einen Ziehstrumpf verfügen, um damit an der Gondel aufgehängt zu werden.

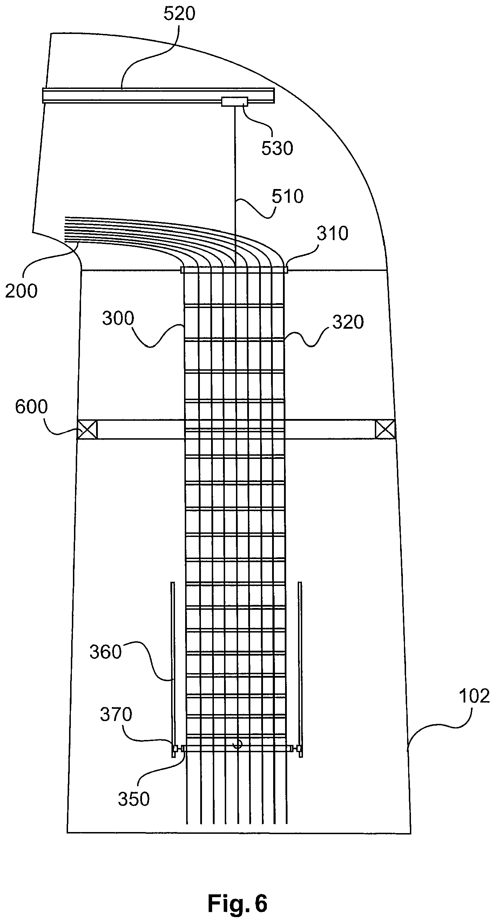

Fig. 6 zeigt eine schematische Schnittansicht eines Teils einer Windenergieanlage gemäß einem dritten Ausführungsbeispiel. In Fig. 6 ist insbesondere die Transporteinheit 500 mit der Kabelführungseinheit 300 gezeigt. Die Transporteinheit weist z. B. einen Träger 520 mit einem Kettenzug 530 und einer Kette oder einem Seil 510 auf. Das Seil 510 verläuft innerhalb der Ringe 310 - 350 der Kabelführungseinheit. Die Kabelführungseinheit ist somit Teil der Transporteinheit bzw. ist an die Transporteinheit angepasst. Dies äußert sich insbesondere durch den Innendurchmesser der Ringe 310 sowie das Anbringen der Kabel 200 am Umfang der Ringe 310. Somit kann sichergestellt werden, dass der z. B. zylinderförmige Bereich im Inneren der Ringe für den Transport frei bleibt. Die Ausgestaltung der Kabelführungseinheit mit den Ringen 320 - 350 sowie der Ringführung 370 und Führung 360 des untersten Ringes 350 entspricht dabei im Wesentlichen der Ausgestaltung der Kabelführungseinheit 300 gemäß dem ersten oder zweiten Ausführungsbeispiel.

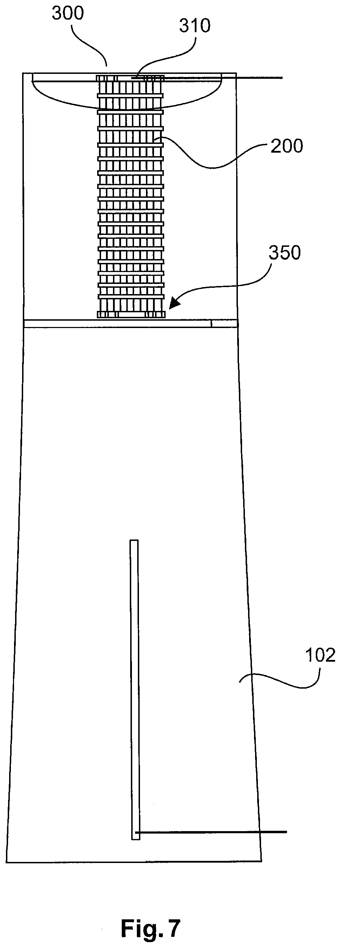

In den Fig. 7 - 9 ist jeweils eine schematische Schnittansicht eines Turms einer Windenergieanlage gemäß der Erfindung gezeigt. In dem Turm 102 ist die Kabelführungseinheit 300 dargestellt. In Fig. 7 ist die Kabelführungseinheit 300 mit dem obersten Ring 310 und dem untersten Ring 350 in einem maximal verdrillten Zustand gezeigt. Hierbei ist der maximale Hub des untersten Ringes 350 vorhanden.

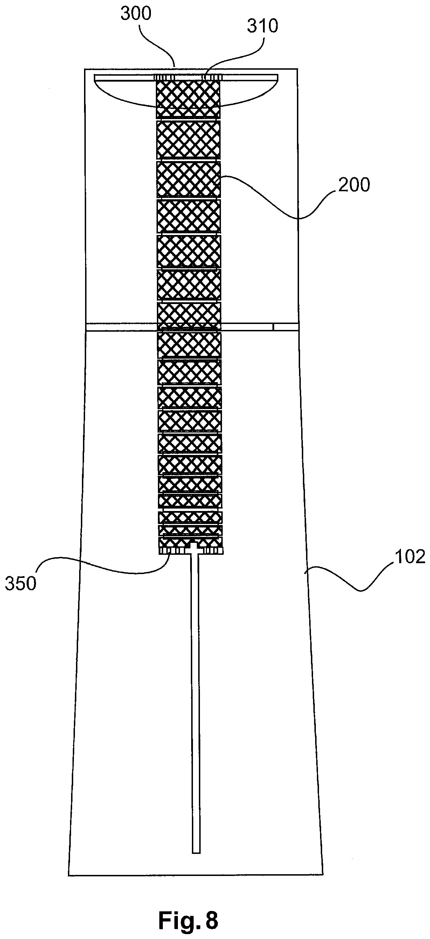

In Fig. 8 ist die Kabelführungseinheit 300 mit dem obersten Ring 310 und dem untersten Ring 350 innerhalb des Turmes 102 dargestellt. In Fig. 8 ist insbesondere ein Zustand dargestellt, bei dem die Kabelführungseinheit mit den daran befestigten Kabeln 200 sich in einem teilweise verdrillten Zustand befindet, d. h. der Hub des untersten Ringes 350 ist kleiner als maximal.

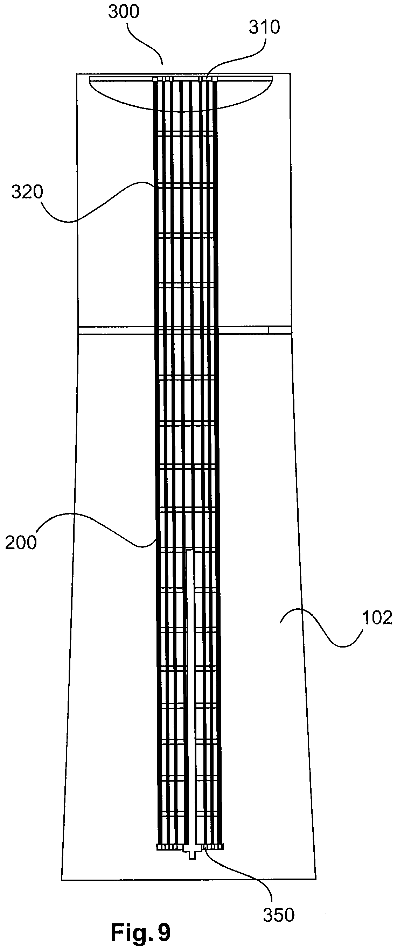

In Fig. 9 ist die Kabelführungseinheit 300 innerhalb des Turms 102 gezeigt. In Fig. 9 ist die Kabelführungseinheit 300 mit den daran befestigten Kabeln 200 in einem nicht verdrillten Zustand gezeigt.

## Patentansprüche

1. Windenergieanlage, mit
einem Turm (102) mit einer Längsachse,
einer Gondel (104), die drehbar auf dem Turm (102) gelagert ist,
einer Mehrzahl von Kabeln (200), welche sich von der Gondel (104) in den Turm (102) nach unten erstrecken, und
einer Transporteinheit, welche innerhalb der Gondel (104) befestigt ist und dazu dient, Lasten (400) innerhalb des Turmes (102) zu der Gondel (104) oder nach unten zu transportieren,
wobei die Transporteinheit eine Kabelführungseinheit (300) mit einer Mehrzahl von Ringen (310 - 350) aufweist, wobei die Mehrzahl von Kabeln (200) am Umfang der Ringe (310 - 350) befestigt sind, so dass ein Bereich im Inneren der Ringe (310 - 350) für den Transport der Lasten (400) freigehalten wird
wobei die Transporteinheit eingerichtet ist, die Lasten (400) innerhalb der Ringe (310 - 350) nach oben oder nach unten zu transportieren,
wobei ein oberster Ring (310) der Mehrzahl von Ringen (310 - 350) an der Gondel (104) befestigt ist und ein unterster Ring (350) der Mehrzahl von Ringen (310 - 350) drehfest in oder an dem Turm (102) befestigt ist, wobei der unterste Ring (350) eine drehfeste Führung (360) entlang der Längsachse des Turms (102) aufweist.

2. Windenergieanlage nach Anspruch 1, wobei
die Mehrzahl der Kabel (200) am äußeren Umfang der Ringe (310 - 350) angeordnet sind.

3. Windenergieanlage nach Anspruch 1 oder 2, wobei
der unterste Ring (350) mindestens zwei Ringführungen (370) aufweist, um mittels der Ringführungen (370) entlang der Führungen (360) geführt zu werden, wobei die Führung (360) sich entlang der Längsachse des Turms (102) erstreckt.

## Claims

1. Wind turbine, with
a tower (102) with a longitudinal axis,
a nacelle (104) which is mounted on the tower (102) so that it can rotate,
multiple cables (200) which extend downwards from the nacelle (104) into the tower (102), and
a transport unit which is fastened inside the nacelle (104) and serves to transport loads (400) inside the tower (102) to the nacelle (104), or down to the ground,
wherein the transport unit has a cable guide unit (300) with multiple rings (310 - 350), wherein the multiple cables (200) are fastened to the circumference of the rings (310 - 350) so that a region inside the rings (310 - 350) is kept free for transporting the loads (400),
wherein the transport unit is configured to transport loads (400) upwards or downwards within the rings (310 - 350),
wherein a top ring (310) of the multiple rings (310 - 350) is fastened to the nacelle (104) and a bottom ring (350) of the multiple rings (310 - 350) is fastened non-rotatably in or on the tower (102), wherein the bottom ring (350) has a non-rotatable guide (360) along the longitudinal axis of the tower (102).

2. Wind turbine according to Claim 1, wherein
the multiple cables (200) are arranged on the outer circumference of the rings (310 - 350).

3. Wind turbine according to Claim 1 or 2, wherein
the bottom ring (350) has at least two ring guides (370) in order to be guided along the guides (360) by means of the ring guides (370), wherein the guide (360) extends along the longitudinal axis of the tower (102).

## Revendications

1. Éolienne, avec
une tour (102) avec un axe longitudinal,
une nacelle (104), qui est montée de manière rotative sur la tour (102),
une pluralité de câbles (200), lesquels s'étendent de la nacelle (104) dans la tour (102) vers le bas, et
une unité de transport, laquelle est fixée à l'intérieur de la nacelle (104) et sert à transporter des charges (400) à l'intérieur de la tour (102) vers la nacelle (104) ou vers le bas,
dans laquelle l'unité de transport présente une unité de guidage de câble (300) avec une pluralité d'anneaux (310 - 350), dans laquelle la pluralité de câbles (200) sont fixés sur la périphérie des anneaux (310 - 350) de façon à laisser libre une zone à l'intérieur des anneaux (310 - 350) pour le transport des charges (400),
dans laquelle l'unité de transport est agencée pour transporter les charges (400) l'intérieur des anneaux (310 - 350) vers le haut ou vers le bas,
dans laquelle un anneau le plus haut (310) de la pluralité d'anneaux (310 - 350) est fixé au niveau de la nacelle (104) et un anneau le plus bas (350) de la pluralité d'anneaux (310 - 350) est fixé solidaire en rotation dans ou au niveau de la tour (102), dans laquelle l'anneau le plus bas (350) présente un guidage solidaire en rotation (360) de long de l'axe longitudinal de la tour (102).

2. Éolienne selon la revendication 1, dans laquelle
la pluralité de câbles (200) sont disposés sur la périphérie extérieure des anneaux (310 - 350).

3. Éolienne selon la revendication 1 ou 2, dans laquelle
l'anneau le plus bas (350) présente au moins deux guidages d'anneau (370) pour être guidé le long des guidages (360) au moyen des guidages d'anneau (370), dans laquelle le guidage (360) s'étend le long de l'axe longitudinal de la tour (102).
